# NEUE EUROPÄISCHE PATENTSCHRIFT

(11) **EP 0 695 320 B2**
(45) Veröffentlichungstag und Bekanntmachung des Hinweises auf die Entscheidung über den Einspruch: **12.12.2001**
(45) Hinweis auf die Patenterteilung: 04.06.1997
(21) Anmeldenummer: 94913598.2
(22) Anmeldetag: 14.04.1994
(51) Int. Cl.: C08J 3/20

(54) **VERFAHREN ZUR HERSTELLUNG EINES VERNETZTEN EXTRUDIERTEN POLYMERPRODUKTES**
METHOD FOR THE EXTRUSION OF A CROSS-LINKED POLYMER
PROCEDE PERMETTANT DE REALISER UN PRODUIT POLYMERE EXTRUDE RETICULE

(30) Priorität: 23.04.1993 DE 4313290
(43) Veröffentlichungstag der Anmeldung: 07.02.1996
(73) Patentinhaber: Bernhard Rustige GmbH und Co. Kommanditgesellschaft, D-28195 Bremen (DE)
(72) Erfinder: KEMPTER, Werner, CH-9430 St. Margrethen (CH)
(74) Vertreter: Hoeger, Stellrecht & Partner
(86) Internationale Anmeldenummer: EP9401152
(87) Internationale Veröffentlichungsnummer: WO9425509

(56) Entgegenhaltungen:
- EP-A- 0 009 817
- DE-A- 2 856 381
- DE-A- 3 035 709
- DE-A- 3 506 164
- GB-A- 863 732
- US-A- 4 703 093
- US-A- 5 076 988
- US-A- 5 112 918
- US-A- 5 112 919
- US-A- 5 238 635

## Beschreibung

Die Erfindung betrifft ein Verfahren zur Herstellung eines vernetzten extrudierten Polymerproduktes, wobei das zu vernetzende Polymere in Granulat- oder Pulverform mit flüssigen Additiven durch Extrudieren verarbeitet wird.

Aus der DE-OS 25 54 525 sind ein Verfahren und eine Vorrichtung zur Herstellung eines vernetzten extrudierten Polymerproduktes bekannt, wobei das zu vernetzende Polymere über einen Extruder-Aufgabetrichter einer Schnekkenstrangpreßmaschine zugeführt wird und die weiteren zur Vernetzung notwendigen Komponenten in flüssiger Form in den unteren Teil des Aufgabetrichters oder direkt in das Halsstück des Extruders eingespritzt werden.

Für das vollständige und gleichmäßige Quervernetzen der Polymeren ist es wichtig, daß ein ausreichendes Mischen sämtlicher Komponenten erzielt werden kann. Dieses Vermischen konnte jedoch mit den bisherigen Mitteln nicht zufriedenstellend gelöst werden. Das bloße Einspritzen bestimmter Bestandteile in das im Extruder-Aufgabetrichter bzw. im Extruderhals befindliche Polymere ermöglicht lediglich im Bereich um den Einspritzpunkt herum die Erzielung einer hohen Zusatzstoffkonzentration. Anschließend muß das Reaktionsgemisch im Extruder durch eine aufwendig gestaltete Extruderschnecke sogar noch während des Homogenisierens vermischt werden. Es ergeben sich somit ungünstige Voraussetzungen für eine gute Vernetzung und darüber hinaus ist eine aufwendig gestaltete und nur mit großem Aufwand herzustellende Extruderschnecke erforderlich.

Ferner hat sich gezeigt, daß mit der Verarbeitung eines herkömmlichen Kunststoffgranulats unter Einspritzung der notwendigen Additive zur Vernetzung nur eine ungenügende Oberflächenbenetzung des Granulats stattfindet, was mit gravierenden Nachteilen verbunden ist. Es wurden zwar Versuche durchgeführt, diese Nachteile zu vermeiden, indem man vor dem Einbringen des Materials in die Extruderschnecke einen Mischer anordnete, um auf diese Weise eine günstige Durchmischung und Benetzung des Granulats zu erreichen. Es hat sich jedoch gezeigt, daß das üblicherweise verwendete Granulat wegen seiner glatten Oberfläche und aufgrund seines relativ großen Volumens nur schwer zu benetzen ist. Daraus ergibt sich der Nachteil, daß bis zur Aufschmelzphase des Materials die flüssigen Bestandteile getrennt vor dem Polymergranulat in der Extruderschnecke gefördert werden, was zu örtlichen Flussigkeitsansammlungen und damit Konzentrationsunterschieden führt, was schließlich die Homogenität des daraus hergestellten Materials stark beeinträchtigt.

Ein weiterentwickeltes Verfahren zur Bearbeitung und zur Vernetzung eines Polymers mit anderen Stoffen beschreibt die US 4,703,093. Hierbei wird das Polymer zur Vergrößerung der Oberfläche und zur Bildung von Spalten in der Oberfläche klein gemahlen und erhitzt. Durch das Mahlen und Erhitzen wird die Aufnahmefähigkeit des Polymers für die Vernetzungsstoffe erhöht. Nach dem Mischen des Polymergranulats mit den Vernetzungsstoffen erfolgt eine Abkühlung.

Auch bei diesem weiterentwickelten Verfahren ist die Vermischung des Polymers.mit den Zusatz- bzw. Vernetzungsstoffen noch ungenügend, obwohl das Stoffgemisch zur Steigerung der Reaktionsfähigkeit erhitzt wird, um eine bessere Durchmischung der Stoffe zu erreichen.

Der Erfindung liegt daher die Aufgabe zugrunde, ein Verfahren der eingangs genannten Art so weiterzubilden, daß eine bessere Benetzung des Granulats und somit eine bessere Vermischung bis zum Aufschmelzen erreicht wird.

Zur Lösung der gestellten Aufgabe ist das erfindungsgemässe Verfahren zur Herstellung eines vernetzten extrudierten Polymerprodukts vorgesehen, wobei das zu vernetzende Polymer mit flüssigen Additiven durch Extrudieren verarbeitet wird, dadurch gekennzeichnet, daß ein Polyme granulat oder Polymerpulver mit zerklüfteter poröser Oberfläche mit mindestens einem über eine Zuführeinrichtung eingebrachten flüssigen Additiv, welches der Vernetzung des Polymeren dient, vermischt wird, wobei die Zufahr des Additivs zwischen einer Zufühvorrichtung für das Polymer und der Stranggießvorrichtung erfolgt.

Dabei wird vorzugsweise Polyethylen zur Vernetzung verwendet. Es ist besonders günstig, ein Polymergranulat/ Polymerpulver, speziell ein Polyethylen, mit einer Dichte von etwa 0,89 bis 1 g/cm³ zu verwenden. Die Korngröße des Polymermaterials beträgt zweckmäßig etwa 10µm bis 2 mm.

Bei der Durchführung des Verfahrens wird das zu vernetzende Polymergranulat/Polymerpulver mit zerklüfteter poröser Oberfläche über die Zuführeinrichtung einer Mischzone zugeführt, in die mindestens ein flüssiges Additiv zur Vernetzung des Polymeren eingespritzt wird,und das Gemisch wird in einer nachgeordneten Stranggießvorrichtung verarbeitet.

Ein Vorteil dieses Verfahrens ist im übrigen, daß neben dem flüssigen Additiv auch weitere flüssige Mittel zugeführt werden können, wie z. B. Stabilisatoren und dgl.

In spezieller Ausführungsform wird das Polyethylenmaterial mit zerklüfteter poröser Oberfläche unter Zusatz eines hydrolysierbaren ungesättigten Silans durch eine Silanol-Kondensationsreaktion vernetzt.

Es ist aber nicht nur eine Silanvernetzung des Polyethylenmaterials vorgesehen, sondern erfindungsgemäß kann das Polyethylenmaterial unter Zusatz eines Peroxides radikalisch vernetzt werden.

Durch die Verwendung eines Polymergranulats/Polymerpulvers mit zerklüfteter poröser Oberfläche bietet sich den in das System eingebrachten flüssigen Additiven eine saugfähige offenporige große Oberfläche, in welche die Flüssigkeit eindringen kann, um somit eine optimale Vermischung zu gewährleisten. Die bisher eingesetzten Polymergranulate wiesen bei relativ großer Korngröße eine glatte Oberfläche auf, mit der keinerlei Saugfähigkeit verbunden war und die daher schlecht zu benetzen war. Somit konnte bei der Vernetzungsreaktion von Polymeren unter Verwendung der bisher üblichen Granulate mit glatter Oberfläche und auch relativ großen Korngrößen im Bereich von 3 bis 4 mm sogar ein Auspressen der in den Extruder eingebrachten Flüssigkeit, verbunden mit unzuträglichen Konzentrationsunterschieden, auftreten.

Das im Rahmen des erfindungsgemäßen Verfahrens eingesetzte neuartige Polymermaterial mit zerklüfteter, stark flüssigkeitsaufnehmender Oberfläche, ist ein Granulat oder Pulver, das durch einen speziellen Polymerisationsprozeß hergestellt wird. Vorzugsweise besteht das Material aus Polyethylen oder auch anderen polymeren Olefinen bzw. deren modifizierten Produkten. Solche Polymergranulate/Polymerpulver werden beispielsweise von der Firma Montecatini unter der Bezeichnung "Spherilene" vertrieben. Derartige Polymere werden beispielsweise unter Verwendung eines Fließbettgasphasenreaktors mit anschließender Entgasung unter Entfernung sämtlicher Monomerbestandteile hergestellt und werden, ohne den bisher üblichen Pelletisierungsmaßnahmen (die zu einer glatten runden Oberfläche führten) unterzogen zu werden, im Verfahren der Erfindung eingesetzt. Das Material stellt somit nach bisherigen Begriffen ein Vorprodukt dar, das jedoch im vorliegenden Verfahren direkt einsetzbar ist, was im Hinblick auf Einsparung an zusätzlichen Verfahrensmaßnahmen und Kosten mit weiteren Vorteilen verbunden ist.

Aufgrund der unregelmäßigen, saugfähigen, offenporigen und stark flüssigkeitsaufnehmenden Oberfläche des zu vernetzenden Materials, die in idealer Weise geeignet ist, die Flüssigkeit an sich zu binden und zu transportieren, ergibt sich darüberhinaus der Vorteil, daß man eine geringere Menge flüssiger Additive zudosieren muß, als es bei der Verwendung herkömmlicher glatter Polymergranulate notwendig war. Durch die besondere Art der Oberflächenstrukturierung des erfindungsgemäß eingesetzten Polymermaterials ist eine bessere Aufnahme von Flüssigkeit in dem Granulat gewährleistet, damit eine bessere Verteilung gegeben, und es geht keine Flüssigkeit verloren.

Eine Weiterbildung der vorliegenden Erfindung sieht vor, sei es aus Gründen der Kostenerspamis oder aus verfahrenstechnischen Gründen, als Ausgangsmaterial des Verfahrens nicht nur das erfindungsgemäße Polymergranulat/ Polymerpulver mit poröser Oberfläche zu verwenden, sondern ein beliebiges Mischungsverhältnis von porösem Polymergranualt gemäß der Erfindung und herkömmlichem, nicht zerklüfteten Polymermaterial. Es kann also je nach Bedarf ein Ausgangsmaterial verwendet werden, das nur einen gewissen Prozentsatz an zerklüftetem, porösem Polymermaterial enthält.

Zur Durchführung des erfindungsgemäßen Verfahrens eignet sich eine Vorrichtung, bestehend aus einer Zuführeinrichtung für das Polymermaterial, einer Zuführeinrichtung für mindestens ein Additiv und einer Stranggießvorrichtung, wobei zwischen der Zuführeinrichtung 3 für das Polymergranulat/Polymerpulver und der Stranggießvorrichtung 2 eine Mischeinrichtung 4 vorgesehen ist, die in eine Zuführeinrichtung 5, 6, 7 für mindestens ein flüssiges Additiv mündet.

Anstelle der Mischeinrichtung 4 kann auch ein Einlaufstutzen 18 vorgesehen sein.

Zur näheren Erläuterung der Erfindung dienen die nachfolgenden Zeichnungen, in denen
Figur 1: schematisiert eine Vorrichtung gemäß einer ersten Ausführungsform zur Durchführung des erfindungsgemäßen Verfahrens,
Figur 2: schematisiert eine abgewandelte Ausführungsform der Vorrichtung nach Figur 1,
Figur 3: die Anordnung von Flüssigkeit und Granulatkorn nach dem Stand der Technik,
Figur 4: die Anordnung von Flüssigkeit und Polymerkorn nach der Erfindung, und
Figur 5: die vergrößerte Darstellung eines Polymerkorns der Erfindung im Schnitt wiedergeben.

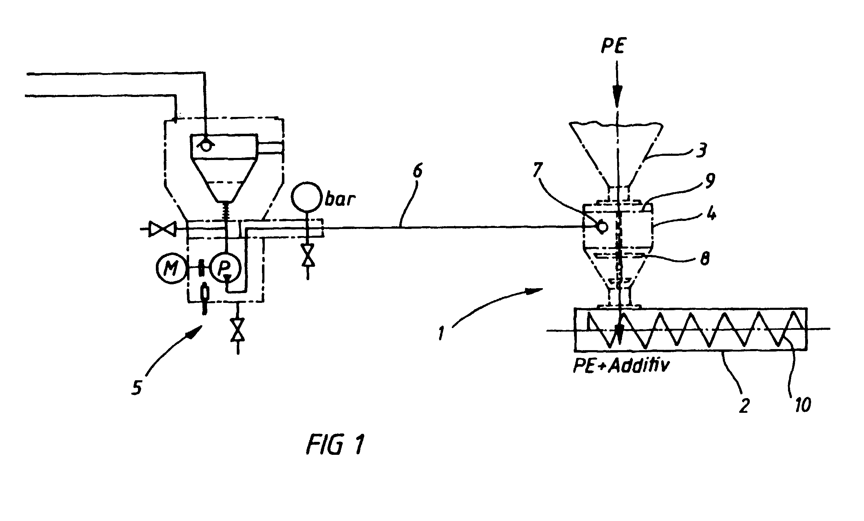

In Figur 1 ist schematisch der Aufbau der für das erfindungsgemäße Verfahren verwendelen Extrudiervorrichtung 1 dargestellt, mit einem Schneckenextruder 2, einem oberhalb des Extruders 2 angeordneten Aufgabetrichter 3 zur Aufnahme des Polymergranulats/Polymerpulvers mit zerklüfteter poröser Oberfläche (vorzugsweise Polyethylen) und einem zwischen dem Aufgabetrichter 3 und dem Extruder 2 angeordneten Mischer 4. In den Mischer 4 mündet ferner eine von der Dosierpumpeneinheit 5 kommende Zuführleitung 6 für die einzuspritzenden flüssigen Additive (speziell eine Silanlösung), die über eine Einspritzdüse 7 in das Innere des Mischers 4 eingebracht werden.

Im Inneren des Behälters 4 ist ein Rührgestänge 8 angeordnet, welches über einen Antrieb 9 antreibbar ist. Der Schneckenextruder 2 ist ein zum Kunststoffstrangpressen bekannter Extruder mit einem Schneckengesamtverhältnis von Länge. Durchmesser von etwa 26 : 1. Dem Schneckenextruder 2 wird das zu verarbeitende Polymerreaktionsgemisch unmittelbar aus dem darüberliegenden Mischer 4 bereits optimal vorgemischt zugegeben.

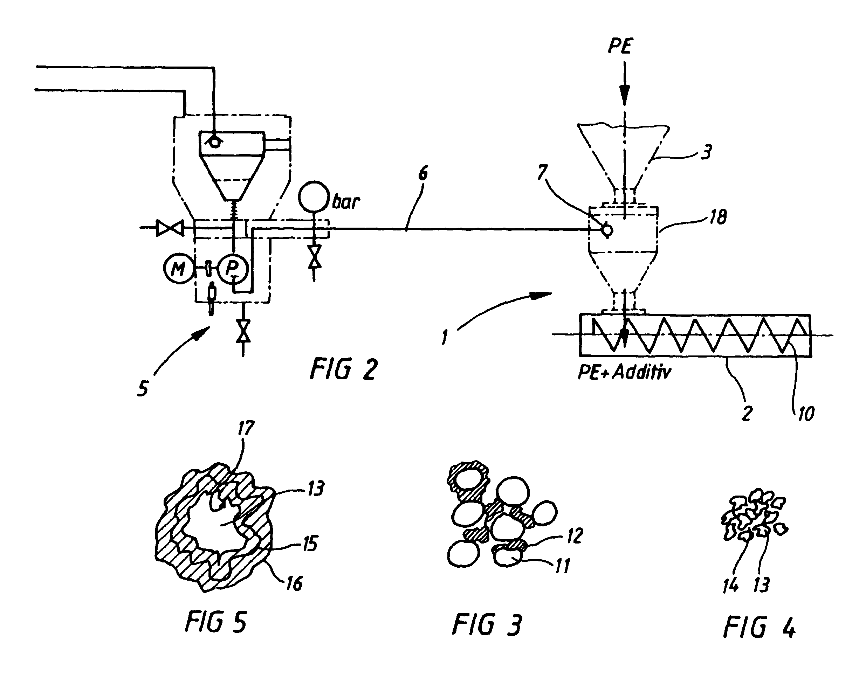

In Figur 2 ist eine abgewandelte Ausführungsform dargestellt, wonach die aus der Dosierpumpeneinheit 5 über die Zuführleitung 6 geförderten flüssigen Additive direkt in einen unterhalb des Aufgabetrichters 3 angeordneten Einlaufstutzen 18 eingespritzt werden.

In Figur 3 ist die nach dem Stand der Technik vorliegende Flüssigkeitsverteilung am Polymergranulatkorn 11 gezeigt. Daraus ist ersichtlich, daß relativ große Granulatkörner 11 mit glatter Oberfläche der Flüssigkeit 12 ausgesetzt sind. Die glatte Oberfläche des Granulats ist nicht geeignet, die Flüssigkeit 12 an sich zu binden, die sich deshalb mehr in den Zwischenräumen zwischen dem Granulatkorn 11 anreichert und weniger die Oberfläche des Granulatkoms benetzt. Auf diese Weise ergeben sich die bekannten, vorstehend beschriebenen Nachteile einer unzureichenden Vermischung und von Konzentrationsunterschieden.

In Figur 4 ist die Anordnung der mit Flüssigkeit 14 benetzten, erfindungsgemäß eingesetzten zerklüfteten Polymerkörner 13 wiedergegeben. Die gegenüber den bisher verwendeten Granulaten wesentlich kleineren Granulatkörner oder Pulverkörner 13 zeigen eine unregelmäßige Oberfläche, so daß sich die Flüssigkeit 14 um das Polymerkorn 13 herum in optimaler Weise anreichert und auf diese Weise die Flüssigkeit 14 mit dem Polymerkorn 13 einerseits im Zwischenraum mittransportiert wird und andererseits im Polymerkorn selbst einsickert und sich dort anlagert.

Dies wird besonders deutlich in Figur 5 dargestellt, in der ein Schnitt durch ein Polymerkorn 13 gezeigt ist. Unterhalb der unregelmäßig ausgebildeten Oberfläche, d.h. also innerhalb des Polymerkorns 13, bildet die Flüssigkeit eine Flüssigkeitssickergrenze 17. Aufgrund dieser Bindung lagert sich die Flüssigkeit in optimaler Weise an der Oberfläche 15 an und bildet eine außenliegende Flüssigkeitsoberfläche 16. Es kommt damit zu einer fein verteilten Anlagerung der Flüssigkeit an das Polymerkorn, die bisher nicht erzielt werden konnte.

Bei der Durchführung des erfindungsgemäßen Verfahrens wird die in den Mischer 4 bzw. in den Einlaufstutzen 18 eingespritzte Flüssigkeit mit dem aus den Aufgabetrichter kommenden Polymergranulat/Polymerpulver mit zerklüfteter, unregelmäßig strukturierter und damit vergrößerter Oberfläche vermischt. Es findet eine optimale Flüssigkeitsanlagerurg an das Korn statt und das Gemisch wird dann in fein verteilter Forn in den Schneckenextruder 2 eingebracht, in den die weitere Verarbeiturg unter inniger Durchmischung des gesamten Materials stattfindet.

Die aufgrund der Erfindung erzeugte optimale Flüssigkeitsverteilung führt zu einer gleichmäßigeren Aufpfropfung bei der Verarbeitung vor der Vernetzungsreaktion. Bei der Aufpfropfreaktion werden zur Vemetzung geeignete Moleküle beispielsweise Silanmoleküle, auf die Polymmergrundlage, beispielsweise Polyethylen, aufgepfropft. Durch die erfindungsgemäßen Maßnahmen kommmt es aufgrund der besseren Flüssigkeitsverteilung zu einer homogeneren Aufpfropfreaktion, wodurch die nachfolgende Vernetzung äußerst homogen abläuft, und somit die Qualität des Endproduktes wesentlich verbessert wird.

Nachfolgend wird noch je ein Beispiel für eine Silan-Vernetzung bzw. Peroxid-Vernetzung gegeben. Diese Beispiele sind aber nicht als Einschränkungen aufzufassen.

| Silan-Vernetzung | |
|---|---|
| Ausgangsmaterial | Spherilene Dichte: 0,926 g/cm³ MIFI 190°C/2, 16kp=2,8g/10 Minuten Schüttdichte: 370g/l |
| Flüssigadditiv | Vinyltrimethoxysilan Dicumyl Peroxid (DI-CUP) Dibutylin-Dilaurat (DBTDL) Stabilisatoren |
| Mischung | 98,2 % Spherilene 1,8 % Flüssigadditiv |
| Anlage | Gravimetrische Dosierung für Spherilene und Flüssigadditiv mit Mischer. Extruder mit einer Schneckenlänge von 25 D mit guter Homogenisierung |
| Verarbeitung | Temperaturprofil am Extruder 170,190,210,220°C; Temperaturprofil am Werkzeug 220-230°C |
| Produkt | Kabel mit Kupfer-Draht |
| Prüfergebnisse | Zugfestigkeit nach ISO R 527: 21,4 Mpa Reißdehnung nach ISO R 527: 526% Wärmedehnung nach ICE 811.2-1: 60%/0% |

| Peroxid-Vernetzung | |
|---|---|
| Ausgangsmaterial | Spherilene Dichte: 0,926 g/cm₃ MIFI 190°C/2,16kp=2,8g/10 Minuten Schüttdichte: 370 g/l |
| Flüssigadditiv | t-Butyl-cumyl-peroxid Antioxydant |
| Mischung A | 1,0% t-Butyl-cumyl-peroxid 0,6% Antioxidant 98,4% Spherilene |
| Mischung B | 1,2% t-Butyl-cumyl-peroxid 0,6% Antioxidant 98,2% Spherilene |
| Mischung C | 1,5% t-Butyl-cumyl-peroxid 0,6% Antioxidant 97,9% Spherilene |
| Anlage | Brabender/Presse |
| Verarbeitung | 10 Minuten auf Brabender bei 140°C 12 Minuten auf Presse bei 120 bar und 190°C |
| Produkt | Platte |
| Prüfergebnisse Mischung A | Zugfestigkeit nach ISO R 527: 20,3 Mpa; Reißdehnung nach ISO R 527: 566%; Wärmedehnung nach ICE 811.2-1: 125%/15% |
| Prüfergebnisse Mischung B | Zugfestigkeit nach ISO R 527: 25,2 Mpa; Reißdehnung nach ISO R 527: 562%; Wärmedehnung nach ICE 811.2-1: 45%/0% |
| Prüfergebnisse Mischung C | Zugfestigkeit nach ISO R 527: 26,0 Mpa; Reißdehnung nach ISO R 527: 575%; Wärmedehnung nach ICE 811.2-1: 25%/0% |

## Patentansprüche

1. Verfahren zur Herstellung eines vernetzten, extrudierten Polymerproduktes, wobei das zu vemetzende Polymer mit flüssigen Additiven durch Extrudieren in einer Stranggießvorrichtung (2) verarbeitet wird und eine zerklüftete Oberfläche aufweist, **dadurch gekennzeichnet, daß** ein Polymergranulat oder Polymerpulver mit zerklüfteter, poröser Oberfläche mit mindestens einem über eine Zuführeinrichtung (5, 6, 7) eingebrachten flüssigen Additiv, welches der Vernetzung des Polymeren dient, vermischt wird, wobei die Zufuhr des Additivs zwischen einer Zuführvorrichtung (3) für das Polymer und der Stranggießvorrichtung (2) erfolgt.

2. Verfahren nach Anspruch 1, **dadurch gekennzeichnet, daß** das Polymergranulat oder Polymerpulver mit zerklüfteter, poröser Oberfläche einer Mischeinrichtung (4), die zwischen der Zuführeinrichtung (3) für das Polymer und der Stranggießvorrichtung (2) vorgesehen ist, zugeführt wird, und in dieser mit dem mindestens einen flüssigen Additiv vermischt wird.

3. Verfahren nach Anspruch 2, **dadurch gekennzeichnet, dass** das Polymergranulat oder Polymerpulver und das eingebrachte flüssige Additiv mittels einer in der Mischeinrichtung (4) vorgesehenen Rühreinrichtung (8) vermischt werden.

4. Verfahren nach einem der Ansprüche 1 bis 3, **dadurch gekennzeichnet, daß** das Polymergranulat oder Polymerpulver mit zerklüfteter, poröser Oberfläche einer Mischzone (4;18) zugeführt wird, in die das mindestens eine flüssige Additiv eingespritzt wird.

5. Verfahren nach einem der Ansprüche 1 bis 4, **dadurch gekennzeichnet, dass** Polyethylen zur Vernetzung verwendet wird.

6. Verfahren nach einem der Ansprüche 1 bis 5, **dadurch gekennzeichnet, dass** ein Polymermaterial mit einer Dichte von 0,89 bis 1 g/cm³ und einer Komgröße von etwa 10 µm bis 2 mm zur Vernetzung verwendet wird.

7. Verfahren nach einem der Ansprüche 1 bis 6, **dadurch gekennzeichnet, dass** das Polyethylengranulat oder Polyethylenpulver mit zerklüfteter, poröser Oberfläche unter Zusatz eines hydrolysierbaren ungesättigten Silans durch eine Silanol-Kondensationsreaktion vernetzt wird.

8. Verfahren nach einem der Ansprüche 1 bis 6, **dadurch gekennzeichnet, dass** das Polyethylengranulat oder Polyethylenpulver mit zerklüfteter, poröser Oberfläche unter Zusatz eines Peroxides radikalisch vernetzt wird.

## Claims

1. Process for the preparation of a crosslinked extruded polymer product, the polymer to be crosslinked being processed with liquid additives by extrusion in an extrusion apparatus (2) and having a fissured surface, **characterized in that** a granulated polymer or a polymer powder having a fissured, porous surface is mixed with at least one liquid additive, introduced by a feed means (5, 6, 7), which serves to crosslink the polymer, the additive being fed in between the feed means (3) for the polymer and extrusion apparatus (2).

2. Process according to claim 1, **characterized in that** the granulated polymer or polymer powder having a fissured, porous surface is fed to a mixing means (4) which is provided between the feed means (3) for the polymer and the extrusion apparatus (2) and is mixed therein with the at least one liquid additive.

3. Process according to claim 2 **characterized in that** the granulated polymer or polymer powder and the liquid additive introduced are mixed by a stirring means (8) provided in the mixing means (4).

4. Process according to any one of claims 1 to 3 **characterized in that** the granulated polymer or polymer powder having a fissured, porous surface is fed to a mixing zone (4, 18), into which the at least one liquid additive is injected.

5. Process according to any one of claims 1 to 4 **characterized in that** polyethylene is used for the crosslinking.

6. Process according to any one of claims 1 to 5 **characterized in that** a polymer material having a density of 0.89 to 1 gm/cm³ and a particle size of from about 10 *µ*m to 2 mm is used for the crosslinking.

7. Process according to any one of claims 1 to 6, **characterized in that** the granulated polyethylene or polyethylene powder having a fissured, porous surface is crosslinked by a silanol condensation reaction with the addition of a hydrolyzable unsaturated silane.

8. Process according to any of claims 1 to 6, **characterized in that** the granulated polyethylene or polyethylene powder having a fissured, porous surface is crosslinked by a free radical method with the addition of a peroxide.

## Revendications

1. Procédé pour la fabrication d'un produit polymère extrudé réticulé, selon lequel le polymère à réticuler est traité par extrusion avec des additifs liquides dans un dispositif de coulée continue (2) et présente une surface crevassée, **caractérisé en ce qu'**un granulat polymère ou une poudre polymère qui présentent une surface poreuse crevassée sont mélangés avec au moins un additif liquide amenée grâce à dispositif d'amenée (5, 6, 7) qui sert à la réticulation du polymère, l'amenée de l'additif se faisant entre un dispositif d'amenée (3) prévu pour le polymère et le dispositif de coulée continue (2).

2. Procédé selon la revendication 1, **caractérisé en ce que** le granulat polymère ou la poudre polymère qui présentent une surface poreuse crevassée sont amenés vers un dispositif mélangeur (4) qui est disposé entre un dispositif d'amenée (3) prévu pour le polymère et le dispositif de coulée continue (2), et est mélangé dans celui-ci avec au moins un additif liquide.

3. Procédé selon la revendication 2, **caractérisé en ce que** le granulat polymère ou la poudre polymère et l'additif liquide amené sont mélangés à l'aide d'un dispositif agitateur (8) prévu dans le dispositif mélangeur (4).

4. Procédé selon l'une des revendications 1 à 3, **caractérisé en ce que** le granulat polymère ou la poudre polymère qui présentent une surface poreuse crevassée sont amenés vers une zone de mélange (4 ; 18) dans laquelle on injecte au moins un additif liquide.

5. Procédé selon l'une des revendications 1 à 4, **caractérisé en ce que** pour la réticulation, on utilise du polyéthylène.

6. Procédé selon l'une des revendications 1 à 5, **caractérisé en ce que** pour la réticulation, on utilise un matériau polymère présentant une densité de 0,89 à 1 g/cm³ et une grosseur de grain d'environ 10 µm à 2 mm.

7. Procédé selon l'une des revendications 1 à 6, **caractérisé en ce que** le granulat de polyéthylène ou la poudre de polyéthylène qui présentent une surface poreuse crevassée sont réticulés grâce à une réaction de condensation de silanol, moyennant l'adjonction d'un silane non saturé hydrolysable.

8. Procédé selon l'une des revendications 1 à 6, **caractérisé en ce que** le granulat de polyéthylène ou la poudre de polyéthylène qui présentent une surface poreuse crevassée sont réticulés par voie radicalaire moyennant l'adjonction d'un peroxyde.
